# EUROPÄISCHE PATENTSCHRIFT

(11) **EP 0 909 732 B1**
(45) Veröffentlichungstag und Bekanntmachung des Hinweises auf die Patenterteilung: **25.07.2001**
(21) Anmeldenummer: 98117118.4
(22) Anmeldetag: 10.09.1998
(51) Int. Cl.: B65G 69/18

(54) **Vorrichtung zum Andocken**
Docking device
Dispositif d'amarrage

(30) Priorität: 16.09.1997 DE 19740607
(43) Veröffentlichungstag der Anmeldung: 21.04.1999
(73) Patentinhaber: Mann + Hummel ProTec GmbH, 71636 Ludwigsburg (DE)
(72) Erfinder: Poller, Stephan Dr., 70569 Stuttgart (DE)
(74) Vertreter: Voth, Gerhard, Dipl.-Ing.

(56) Entgegenhaltungen:
- EP-A- 0 092 008
- DE-C- 677 627
- FR-A- 2 709 118

## Beschreibung

Die Erfindung betrifft einen Absaugbehälter oder eine Schleusenstation zum Andocken an ein mobiles Transportsilo.

Aus der DE 44 16 011 A1 ist eine Vorrichtung zum Andocken eines Containers an einem Entleerungstrichter bekannt. Die Aufgabe dieser Andockvorrichtung bestand darin, das Eindringen von Keimen in den Behälter zu verhindern. Dafür wird eine Hub/Schwenkvorrichtung beschrieben, mit der die Schutzkappe entfernt und im gleichen Arbeitsgang der Schutzdeckel des Behälters, der das Schüttgut aufnehmen soll, herausgeschwenkt wird. Durch die Gleichzeitigkeit beider Vorgänge sind die Öffnungen nur kurze Zeit der Umgebungsluft ausgesetzt, so daß das Eindringen von Keimen weitestgehend unterbunden wird. Der fahrbare Behälter wird dann auf den anderen aufgesetzt; eine Manschette übernimmt die Dichtfunktion. Die beschriebene Vorrichtung ist für die pharmazeutische Industrie zwar geeignet, eine allgemeine Verwendung ist jedoch durch diese spezielle Funktionsweise nicht möglich.

Es ist weiterhin aus der DE 34 38 316 A1 eine Vorrichtung zur Naßentleerung einer transportablen Galvaniktrommel bekannt. Die Entleerung der Galvaniktrommel erfolgt unmittelbar in einen darunter befindlichen transportablen Zentrifugenkorb, in welchem die galvanisierten Teile von der Flüssigkeit getrennt werden. Verfahrenstechnisch bietet sich für die Umfüllung diese Naßentleerung an, bei der die Teile über eine Flüssigkeit von dem ersten Behälter in den zweiten Behälter geschwemmt werden. Zur Abdichtung zwischen den beiden Behälters wird eine sog. Blähdichtung vorgeschlagen. Diese besteht aus einem ringförmig angeordneten Schlauch, der durch ein geeignetes Medium aufgebläht werden kann und so den Zwischenraum zwischen beiden Behältern dichtet. Ein Nachteil dieser Vorrichtung besteht darin, daß eine spezielle Dichtung verwendet werden muß, die diese erheblich verteuert.

Es ist ferner in der DE 196 15 646 eine Kupplungseinrichtung beschrieben, wobei ein fahrbarer Behälter über einen weiteren bewegt wird, mit der Kupplungseinrichtung mit diesem verbunden wird und anschließend seinen Inhalt entleeren kann. Die Dichtung erfolgt dadurch, daß die Kupplungsstutzen schräg ausgeführt sind. Durch das Zusammenfahren zweier schräger Flächen entstehen Kräfte senkrecht zur Fahrrichtung, die für die Dichtfunktion verwendet werden. Auch diese Dichtungsmechanik ist sehr aufwendig und nur bei besonderen Bedingungen zweckmäßig.

Aus dem DE-GM 7 339 570 ist eine fahrbare Fördereinrichtung für den Saug- oder Druckbetrieb bekannt. Beschrieben wird in dem Gebrauchsmuster eine modulartige Zusammenstellung, wobei sich unter den Modulen auch ein fahrbarer Absaugkasten befindet, der auf Rollen bewegt werden kann. Die Verbindung zu einem vorgeschalteten Behälter wird über einen Schlauch realisiert.

Der Erfindung liegt die Aufgabe zugrunde, einen Absaugbehälter zum Andocken an ein mobiles Transportsilo zu schaffen, der eine einfache und zuverlässige Abdichtung gewährleistet sowie universell einsetzbar ist.

Diese Aufgabe wird durch einen Absaugbehälter mit den Merkmalen des Anspruchs 1 gelöst.

Der wesentliche Vorteil der Vorrichtung zum Andocken besteht darin, daß sich der fahrbare Absaugkasten über die exzentrisch angebrachten Rädern zwischen Boden und vorgeschaltetem Behälter klemmt. Der gesamte Vorgang ist damit einfach zu handhaben. In einem Arbeitsgang wird damit das Abdichten und das Arretieren vorgenommen.

Gemäß einer Ausgestaltung der Erfindung arretiert sich die Hebeleinrichtung von selbst; es müssen damit keine zusätzlichen Befestigungsmittel oder Befestigungselemente verwendet werden.

Über eine geeignete Federeinrichtung kann gemäß einer Weiterbildung der Erfindung der nötige Druck aufgebracht werden, um die Vorrichtung an ein Silo anzupressen bzw. zu arretieren. Die Federeinrichtung kann am Einlauf der Vorrichtung angebracht sein. Es besteht auch die Möglichkeit, die Federeinrichtung am Boden der Vorrichtung anzuordnen.

Die beschriebene Vorrichtung eignet sich insbesondere zum Transport von Schüttgut, das pneumatisch im Druck- oder Saugbetrieb gefördert wird. Eine einfache Handhabung wird dadurch erreicht, daß die Vorrichtung auf Rädern fahrbar montiert ist.

Diese und weitere Merkmale von bevorzugten Weiterbildungen der Erfindung gehen außer aus den Ansprüchen auch aus der Beschreibung und den Zeichnungen hervor.

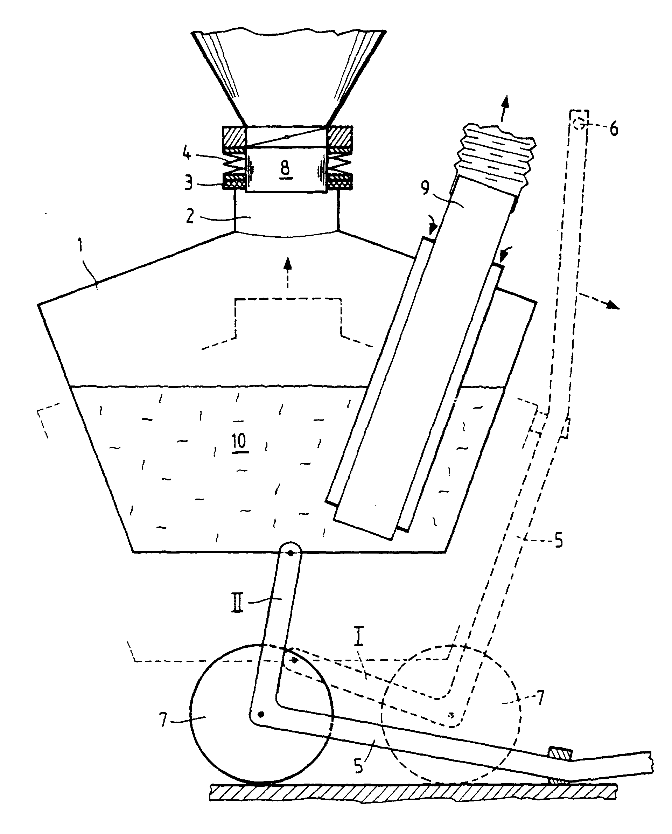

Die Erfindung wird nachfolgend anhand eines Ausführungsbeispiels näher erläutert. Die Figur zeigt eine Vorrichtung zum Andocken von einem Absaugbehälter oder einer Schleusenstation an ein mobiles Transportsilo.

Schüttgüter werden im allgemeinen lose oder in Gebinden transportiert. Beim losen Transport werden als Transportmittel Silofahrzeug oder Container verwendet. Bei beiden Transportmitteln wird das Schüttgut beim Hersteller in das Transportmittel (Silo oder Container) hinein gefördert. Das Schüttgut wird dann mit dem Transportmittel zum Verarbeiter transportiert. Beim Verarbeiter wird das Schüttgut aus dem Transportmittel entleert und in weitere Vorratsbehältnisse abgefüllt.

Beim Transport in Gebinden wird das Schüttgut beim Hersteller in die Gebinde abgefüllt. Dies sind im allgemeinen Säcke, Big-Bags oder Oktabins. In den Gebinden wird das Schüttgut zum Verarbeiter transportiert; dort wird das Gebinde entweder direkt in die Verarbeitungsmaschine entleert oder in weitere Vorratsbehältnisse transportiert. Das Gebinde (Sackware, Oktabins, Big-Bag) muß dann, sofern es sich nicht um Mehrwegware handelt, entsorgt werden.

Um diese Probleme beim Transport als lose Ware und in Gebinden zu umgehen, werden in letzter Zeit häufiger sogenannte Transportsilos verwendet. Beim Hersteller wird das Schüttgut in diese Transportsilos abgefüllt und in den Transportsilos zum Verarbeiter transportiert. Dieser kann das Transportsilo bei sich auf dem Gelände aufstellen und seine Verarbeitungsmaschinen daraus speisen. Ein Umfüllen in zusätzliche Vorratsbehälter fällt also weg.

Um nun das Schüttgut von dem Transportsilo zur Verarbeitungsmaschine zu transportieren, werden zum einen sogenannte Absaugbehälter verwendet, die an den Auslaßstutzen des Transportsilos angeflanscht werden und aus denen das Schüttgut pneumatisch im Saugbetrieb zur Verarbeitungsmaschine transportiert wird. Zum anderen werden Schleusenstationen verwendet, die das Schüttgut aus dem Transportsilo in das Förderrohr mit einem anderen Druckniveau einspeisen. Damit wird das Material pneumatisch im Saug- oder Druckbetrieb wiederum zu den Verarbeitungsmaschinen transportiert.

Beide Varianten, d. h. sowohl der Absaugbehälter als auch die Schleusenstation haben den Nachteil, daß sie schwer zu transportieren und nur mit größerem Zeitaufwand an das Transportsilo anzuflanschen sind. Dies umgeht die im folgenden beschriebene Anmeldung.

Der Absaugbehälter oder die Schleusenstation ist zum einen auf Räder montiert und kann auf einfache Art und Weise unter die Transportsilos gefahren werden. Die Räder sind dabei so groß ausgebildet, daß sie auch über die Füße des Transportsilos fahren können.

Weiterhin verfügt der Absaugbehälter oder die Schleusenstation über eine einfache Vorrichtung zur Andockung, mit der es gelingt, den Behälter über die Schleusenstation in einem Arbeitsgang unter das Transportsilo zu fahren, anzuschließen, abzudichten und zu arretieren.

Diese Vorrichtung wird im folgenden näher beschrieben.

Die Vorrichtung gemäß der Figur besteht aus
- einem Absaugkasten oder einer Schleusenstation (1),
- einem Einlaßstutzen (2),
- einem Dichtungselement (3),
- einem elastischen Zwischenteil (4), das bewirkt, daß mit einer gewissen Kraft abgedichtet und er Behälter oder Schleusenstation fest arretiert wird,
- einer Hebelanordnung (5), die bewirkt, daß Behälter oder Schleusenstation angehoben werden kann und fest in der Arretierung verbleibt und mit der der Behälter oder die Schleusenstation geschoben werden kann.

Die Hebeleinrichtung ist mit einem Griff (6) ausgestattet und mit Rädern (7), die an der Hebeleinrichtung angebracht sind.

Für den Transport befindet sich die Hebeleinrichtung in der Stellung I. Der Hebel liegt dabei an der Wandung des Behälters bzw. der Schleusenstation an. In dieser Stellung kann der Behälter bzw. die Schleusenstation mit dem verlängerten Hebel sehr gut über die Rollen transportiert werden.

Man fährt den Behälter bzw. die Schleusenstation also unter das Transportsilo und plaziert den Einlauf mit dem Federpaket und der Dichtung unter den Auslaßstutzen des Transportsilos (8); dann bewegt man den Hebel nach unten, bis er in der Stellung II einrastet.

Durch die Inneneinrichtung wird nun der Behälter bzw. die Schleusenstation nach oben gedrückt, die Dichtung liegt sich an den Auslaßstutzen an und die Federpakete drücken sich zusammen. So wird zum einen die Kraft aufgebracht, um den Einlaßstutzen gegenüber dem Auslaßstutzen abzudichten und zum zweiten den Behälter bzw. die Schleusenstation in der Stellung II zu arretieren. Die Hebeleinrichtung liegt dabei am Boden auf und gibt der Vorrichtung die genügende Stabilität.

Die Federeinrichtung kann dabei als Gummipaket, als Einheit mit Schrauben oder Tellerfedern oder als Gummimanschette ausgeführt werden. Die Federeinrichtung kann entweder am Auslauf des Transportsilos (8) oder am Einlauf des Behälters bzw. der Schleusenstation (2) oder am Boden des Behälters bzw. der Schleusenstation (1) angebracht werden.

## Patentansprüche

1. Absaugbehälter oder Schleusenstation zum Andocken an ein mobiles Transportsilo, wobei am Absaugbehälter (1) eine Hebeleinrichtung (5) um eine horizontale Achse drehbar angeordnet ist, und wobei die Hebeleinrichtung (5) mit exzentrisch zur Drehachse angeordneten Rädern (7) ausgestattet ist, derart, dass der Absaugbehälter (1) auf den Rädern (7) in einem Arbeitsgang an den Auslauf des Transportsilos (8) herangefahren und durch Drehen der Hebeleinrichtung (5) nach oben an den Auslauf des Transportsilos (8) bewegt, gleichzeitig abgedichtet und arretiert werden kann.

2. Vorrichtung nach Anspruch 1, dadurch gekennzeichnet, daß die Hebeleinrichtung (5) eine Selbstarretierung aufweist.

3. Vorrichtung nach Anspruch 1, dadurch gekennzeichnet, daß eine Federeinrichtung (4) vorgesehen ist, mit welcher Druck aufgebracht wird, um die Vorrichtung zum einen an das Silo anzupressen und zum anderen zu arretieren.

4. Vorrichtung nach Anspruch 3, dadurch gekennzeichnet, daß die Federeinrichtung am Einlauf der Vorrichtung angebracht ist.

5. Vorrichtung nach Anspruch 3, dadurch gekennzeichnet, daß die Federeinrichtung am Boden der Vorrichtung angebracht ist.

6. Vorrichtung nach einem der vorherigen Ansprüche, dadurch gekennzeichnet, daß eine Absaugeinrichtung (9) vorgesehen ist zum Fördern des in der Vorrichtung enthaltenen Schüttguts (10) im Druck- oder Saugbetrieb.

7. Vorrichtung nach einem der vorherigen Ansprüche, dadurch gekennzeichnet, daß eine Dichtung (3) am Einlauf der Vorrichtung vorgesehen ist, mit welcher der Auslauf der Transportvorrichtung (8) abgedichtet wird.

## Claims

1. Suction vessel or locking station for docking against a mobile transportable silo, wherein a lever arrangement (5) is disposed on the suction vessel (1) so as to be rotatable about a horizontal axis, and wherein the lever arrangement (5) is provided with wheels (7), which are disposed eccentrically relative to the axis of rotation, in such a manner that the suction vessel (1) can be driven up to the outlet of the transportable silo (8) on the wheels (7) in one operation and can be moved to the outlet of the transportable silo (8) by rotating the lever arrangement (5) upwardly, and said vessel can simultaneously be sealed and locked in position.

2. Apparatus according to claim 1, characterised in that the lever arrangement (5) has a self-locking device.

3. Apparatus according to claim 1, characterised in that a resilient arrangement (4) is provided, by means of which pressure is applied in order, on the one hand, to press the apparatus against the silo and, on the other hand, to lock said apparatus in position.

4. Apparatus according to claim 3, characterised in that the resilient arrangement is attached to the inlet of the apparatus.

5. Apparatus according to claim 3, characterised in that the resilient arrangement is attached to the base of the apparatus.

6. Apparatus according to one of the previous claims, characterised in that a suction arrangement (9) is provided to convey the loose material (10), which is contained in the apparatus, in the pressure or suction operation.

7. Apparatus according to one of the previous claims, characterised in that a seal (3) is provided at the inlet of the apparatus, by means of which seal the outlet of the transportable silo (8) is sealed.

## Revendications

1. Récipient d'aspiration ou station à écluse, pour s'amarrer à un silo mobile de transport,
caractérisé en ce que
sur le récipient d'aspiration (1) est monté, pivotant autour d'un axe horizontal, un dispositif à levier (5) portant des roues (7) excentrées par rapport à l'axe de rotation, de sorte que le récipient (1) peut être amené sur ses roues sous la sortie du silo de transport (8) puis, par rotation du dispositif à levier (5), être soulevé vers la sortie de ce silo (8), et raccordé de manière étanche à cette sortie avec blocage.

2. Dispositif selon la revendication 1,
caractérisé en ce que
le dispositif à levier (5) présente un blocage automatique.

3. Dispositif selon la revendication 1,
caractérisé en ce qu'
il est prévu un dispositif élastique (4) par l'intermédiaire duquel est exercée une pression servant d'une part à appliquer le dispositif et d'autre part à assurer le bocage.

4. Dispositif selon la revendication 3,
caractérisé en ce que
le dispositif élastique est monté à l'entrée du dispositif.

5. Dispositif selon la revendication 3,
caractérisé en ce que
le dispositif élastique est monté sur le fond du dispositif.

6. Dispositif selon l'une quelconque des revendications précédentes,
caractérisé par
un dispositif d'aspiration (9) pour refouler par pression ou par aspiration le produit en vrac (10) contenu dans le dispositif.

7. Dispositif selon l'une quelconque des revendications précédentes,
caractérisé par
un joint (3) à l'entrée du dispositif qui assure, l'étanchéité avec la sortie du dispositif de transport (8).
